# EUROPEAN PATENT SPECIFICATION

(11) **EP 4 159 606 B1**
(45) Date of publication and mention of the grant of the patent: **06.11.2024**
(21) Application number: 22196649.2
(22) Date of filing: 20.09.2022
(51) Int. Cl.: B62J 45/415, B62K 5/027, B62K 5/05, B62K 5/08, B62K 5/10

(54) **LEANING VEHICLE**
NEIGEFAHRZEUG
VÉHICULE INCLINABLE

(30) Priority: 30.09.2021 JP 2021161637; 02.11.2021 JP 2021179492
(43) Date of publication of application: 05.04.2023
(73) Proprietor: Yamaha Hatsudoki Kabushiki Kaisha, Iwata-shi, Shizuoka 438-8501 (JP)
(72) Inventor: Nagata, Tatsuya, Iwata-shi, Shizuoka (JP); Uchiyama, Toshifumi, Iwata-shi, Shizuoka (JP)
(74) Representative: Grünecker Patent- und Rechtsanwälte PartG mbB

(56) References cited:
- EP-A1- 3 072 794
- EP-A1- 3 421 341
- EP-A1- 3 605 496
- EP-A1- 3 640 917
- EP-A1- 3 889 021
- WO-A1-2020/138395
- WO-A1-2020/188595
- DE-A1- 102020 214 413
- US-A1- 2020 283 092

## Description

The present invention relates to a leaning vehicle according to the preamble of independent claim 1. In particular such leaning vehicle includes a left front wheel and a right front wheel and is capable of leaning leftward and rightward when turning. Such a leaning vehicle can be taken from the prior art document EP 3 421 341 A1.

Furthermore, the prior art document EP 3 072 794 A1 or the prior art document WO 2020/138395 A1 discloses a leaning vehicle having a vehicle body frame. A link mechanism is supported on the vehicle body frame. A left front wheel is supported on the link mechanism. A right front wheel is supported on the link mechanism and arranged rightward of the left front wheel in a vehicle left-right direction. A rear wheel is supported on the vehicle body frame and arranged rearward relative to the left front wheel and the right front wheel in a vehicle front-rear direction. A seat is supported on the vehicle body frame and arranged rearward relative to the link mechanism in the vehicle front-rear direction. The link mechanism includes an upper arm supported on the vehicle body frame so that the upper arm is rotatable about a first axis extending in the vehicle front-rear direction, and extending leftward and rightward in the vehicle left-right direction, a lower arm supported on the vehicle body frame so that the lower arm is rotatable about a second axis extending in the vehicle front-rear direction, extending leftward and rightward in the vehicle left-right direction, and arranged downward of the upper arm in a vehicle up-down direction. A left side member is connected to the upper arm so that the left side member is rotatable about a third axis extending in the vehicle front-rear direction, connected to the lower arm so that the left side member is rotatable about a fourth axis extending in the vehicle front-rear direction, and extending upward and downward in the vehicle up-down direction. A right side member is supported on the upper arm so that the right side member is rotatable about a fifth axis extending in the vehicle front-rear direction, supported on the lower arm so that the right side member is rotatable about a sixth axis extending in the vehicle front-rear direction, extending upward and downward in the vehicle up-down direction, and arranged rightward of the left side member in the vehicle left-right direction. The leaning vehicle comprises an actuator connected to the vehicle body frame and at least one of the upper arm and the lower arm, and configured to generate a torque that rotates the upper arm and the lower arm relative to the vehicle body frame. An inertial measurement unit is supported on the vehicle body frame. A control device is configured to receive a signal from the inertial measurement unit to control the actuator.

As disclosed in International Publication WO 2020/050157 A, for example, leaning vehicles have been known in the art, which include a left front wheel, a right front wheel and a vehicle body frame, and include a link mechanism of the parallel four-section link (also called parallelogram link) system as a mechanism for leaning the vehicle body frame. The vehicle body frame includes a head pipe that supports the steering shaft so that the steering shaft can rotate left and right. The link mechanism includes an upper arm and a lower arm extending leftward and rightward, a left side member arranged leftward of the head pipe, and a right side member arranged rightward of the head pipe. The upper arm and the lower arm are rotatably supported on the head pipe. The left side member and the right side member are rotatably connected to the upper arm and the lower arm. When the vehicle body frame leans leftward or rightward, the upper arm and the lower arm rotate relative to the head pipe.

JP 2018-149962 A discloses a leaning vehicle with which it is possible to control the leftward or rightward lean angle (hereinafter referred to also as roll angle) of the vehicle body frame. The leaning vehicle disclosed in JP 2018-149962 A includes a motor that gives a rotational force to the upper arm, and a roll angle sensor that detects the roll angle or the roll angle velocity. It is possible to control the roll angle by controlling the motor based on the roll angle or the roll angle velocity detected by the roll angle sensor. The roll angle sensor is a rotation sensor that detects the relative rotation of the upper arm and the lower arm with respect to the vehicle body frame, or a rotation sensor that detects the rotation of a rotor of the motor.

Now, the rotation sensor that detects the relative rotation of the upper arm and the lower arm with respect to the vehicle body frame needs to be arranged in the vicinity of the upper arm and the lower arm. The rotation sensor that detects the rotation of the rotor of the motor needs to be arranged in the vicinity of the motor. Therefore, with the leaning vehicle disclosed in JP 2018-149962 A, the roll angle sensor needs to be arranged in a front portion of the vehicle. However, with a leaning vehicle that includes a left front wheel and a right front wheel, and a link mechanism of the parallel four-section link system, the front portion of the vehicle has a large and complicated configuration, as opposed to a motorcycle that includes only one front wheel and does not include a link mechanism. Therefore, if a roll angle sensor is installed on a front portion of the vehicle, the front portion of the vehicle further becomes larger and more complicated.

An object of the present invention is to provide a leaning vehicle with which it is possible to desirably control the lean angle of the vehicle body frame while preventing the front portion of the vehicle from becoming larger and more complicated. According to the present invention said object is solved by a leaning vehicle having the features of independent claim 1. Preferred embodiments are laid down in the dependent claims.

A leaning vehicle disclosed herein includes: a vehicle body frame; a link mechanism supported on the vehicle body frame; a left front wheel supported on the link mechanism; a right front wheel supported on the link mechanism and arranged rightward of the left front wheel; a rear wheel supported on the vehicle body frame and arranged rearward relative to the left front wheel and the right front wheel; and a seat supported on the vehicle body frame and arranged rearward relative to the link mechanism. The link mechanism includes: an upper arm supported on the vehicle body frame so that the upper arm is rotatable about a first axis extending in a vehicle front-rear direction, and extending leftward and rightward; a lower arm supported on the vehicle body frame so that the lower arm is rotatable about a second axis extending in the vehicle front-rear direction, extending leftward and rightward, and arranged downward of the upper arm; a left side member connected to the upper arm so that the left side member is rotatable about a third axis extending in the vehicle front-rear direction, connected to the lower arm so that the left side member is rotatable about a fourth axis extending in the vehicle front-rear direction, and extending upward and downward; and a right side member supported on the upper arm so that the right side member is rotatable about a fifth axis extending in the vehicle front-rear direction, supported on the lower arm so that the right side member is rotatable about a sixth axis extending in the vehicle front-rear direction, extending upward and downward, and arranged rightward of the left side member. The leaning vehicle includes an actuator, an inertial measurement unit, and a control device that receives a signal from the inertial measurement unit to control the actuator. The actuator is connected to the vehicle body frame and at least one of the upper arm and the lower arm, and configured to generate a torque that rotates the upper arm and the lower arm relative to the vehicle body frame. The inertial measurement unit is supported on the vehicle body frame, and arranged downward relative to an upper end of the upper arm, upward relative to a lower end of the lower arm, rightward relative to a left end of the left side member, leftward relative to a right end of the right side member, and rearward relative to a center of the rear wheel in the vehicle front-rear direction.

With the leaning vehicle described above, the control device receives a signal from the inertial measurement unit to control the actuator, thereby rotating the upper arm and the lower arm of the link mechanism relative to the vehicle body frame. Thus, the leftward or rightward lean angle of the vehicle body frame is controlled. As opposed to a rotation sensor that detects the relative rotation between the upper arm and the lower arm and the vehicle body frame and a rotation sensor that detects the rotation of the rotor of the motor, it is not essential that the inertial measurement unit be arranged in the vicinity of the link mechanism.

Needless to say, the inertial measurement unit can be arranged in the front portion of the vehicle. In order to detect the behavior of the left front wheel and the right front wheel by the inertial measurement unit and control the actuator based on the behavior, it is suitable that the inertial measurement unit be arranged in the vicinity of the link mechanism. On the other hand, studies are made on how to control the attitude of the vehicle body frame by other methods, instead of controlling the attitude of the vehicle body frame based on the result of detecting the behavior of the left front wheel and the right front wheel and the behavior of the vehicle body in the vicinity of the link mechanism. As a result, the arrangement of the inertial measurement unit that is suitable for controlling the attitude of the vehicle body frame, other than the vicinity of the link mechanism can be suggested.

With the leaning vehicle described above, the inertial measurement unit is arranged close to the link mechanism for the vehicle up-down direction and the vehicle left-right direction, but is arranged rearward relative to the front end of the seat and rearward relative to a center of the rear wheel in the vehicle front-rear direction. The inertial measurement unit is arranged far away from the link mechanism for the vehicle front-rear direction. Therefore, it is possible to desirably detect the lean of the vehicle body frame by the inertial measurement unit while preventing the front portion of the vehicle from becoming larger and more complicated.

The leaning vehicle may include a power unit pivotally supported on the vehicle body frame and connected to the rear wheel so that power can be transmitted therebetween. The inertial measurement unit may be arranged rearward relative to the power unit.

Thus, the inertial measurement unit is unlikely to be affected by heat and vibrations generated from the power unit. Therefore, it is possible to desirably detect the tilt of the vehicle body frame while preventing the front portion of the vehicle from becoming larger and more complicated.

According to the invention the inertial measurement unit is arranged rearward relative to a center of the rear wheel.

The leaning vehicle may include a rear suspension including an upper support portion supported on the vehicle body frame so that the upper support portion is pivotable about a first pivot center, and a lower support portion supported on the rear wheel so that the lower support portion is pivotable about a second pivot center.

The inertial measurement unit may be arranged rearward relative to the first pivot center as the vehicle is viewed from the side.

The inertial measurement unit may be arranged rearward relative to the second pivot center as the vehicle is viewed from the side.

The inertial measurement unit may be arranged at a position that is off a straight line passing through the first pivot center and the second pivot center as the vehicle is viewed from the side.

The rear suspension may be arranged so that a line segment that connects together the first pivot center and the second pivot center coincides with a vertical line or is inclined by an angle of 10 degrees or less relative to the vertical line as the vehicle is viewed from the side.

The leaning vehicle may include a storage box supported on the vehicle body frame and arranged downward of the seat. The inertial measurement unit may be arranged rearward of the storage box.

The vehicle body frame may include a support frame arranged rearward of the storage box. The leaning vehicle may include a bracket fixed to the support frame and attached to the inertial measurement unit.

The bracket may include a plate-shaped main portion having a first bolt hole formed therein and extending downward, and an arm portion having a second bolt hole formed therein and extending forward from the main portion. The leaning vehicle may include a first bolt inserted through the first bolt hole and fixing the inertial measurement unit to the bracket, and a second bolt inserted through the second bolt hole and fixing the bracket to the support frame. The inertial measurement unit may be arranged between the support frame and the main portion of the bracket.

The inertial measurement unit may be arranged so that a dimension of the inertial measurement unit in a vehicle up-down direction is greater than a dimension of the inertial measurement unit in the vehicle front-rear direction.

The control device may be configured to control the actuator so that the vehicle body frame is in an upright position while the leaning vehicle is standing still.

### Advantageous Effects Of Invention

According to the present invention, it is possible to provide a leaning vehicle with which it is possible to desirably control the lean angle of the vehicle body frame while preventing the front portion of the vehicle from becoming larger and more complicated.

### BRIEF DESCRIPTION OF THE DRAWINGS

FIG. 1 is a left side view showing a leaning vehicle according to one embodiment.
FIG. 2 is a left side view showing a main part of the leaning vehicle.
FIG. 3 is a left side view showing a part of a front portion of the leaning vehicle.
FIG. 4 is a front view showing a part of the front portion of the leaning vehicle.
FIG. 5 is a plan view showing a part of the front portion of the leaning vehicle.
FIG. 6 is a perspective view showing a part of the rear portion of the leaning vehicle.
FIG. 7 is a front view showing a part of the front portion of the leaning vehicle when the vehicle body frame is leaning leftward.
FIG. 8 is a front view showing a part of the leaning vehicle.
FIG. 9 is a perspective view showing a part of the rear portion of the leaning vehicle.

### DETAILED DESCRIPTION OF THE PREFERRED EMBODIMENTS

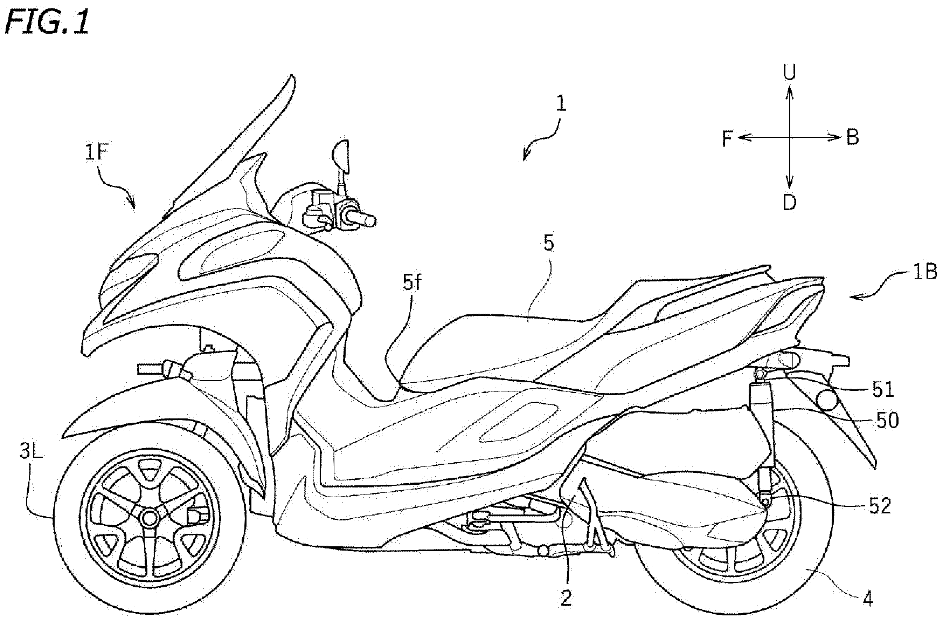

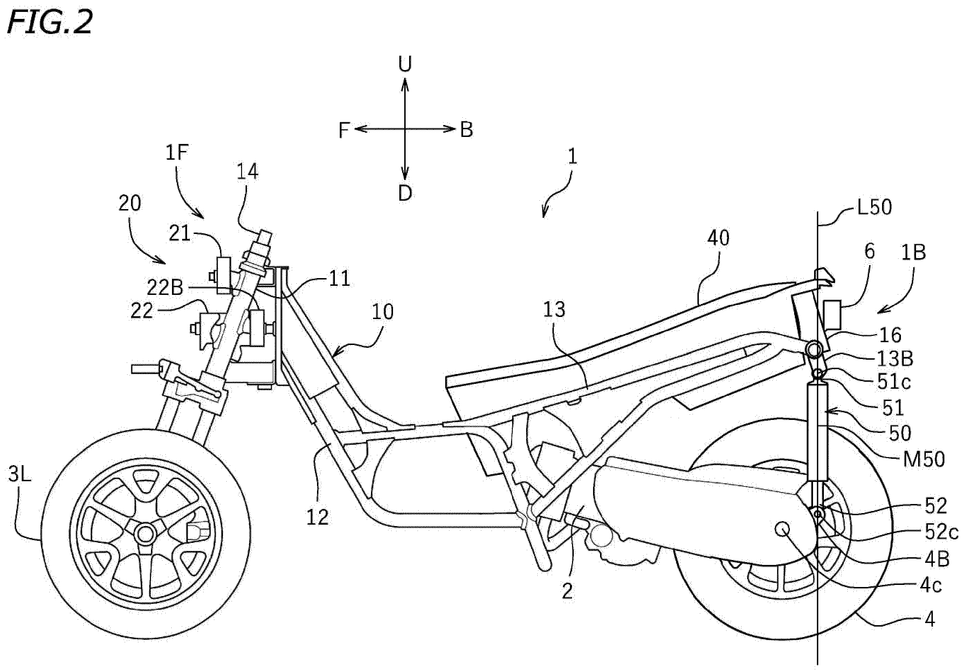

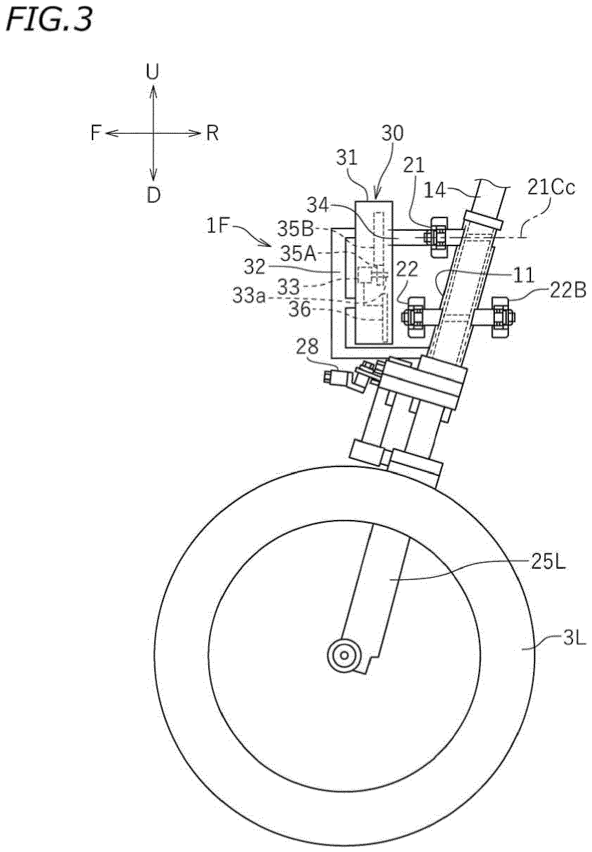

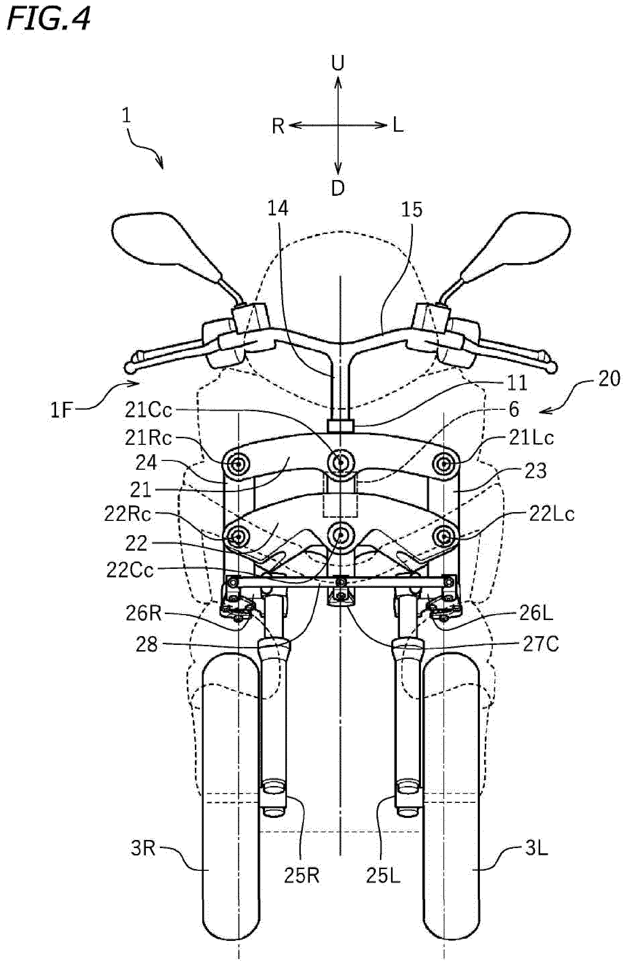

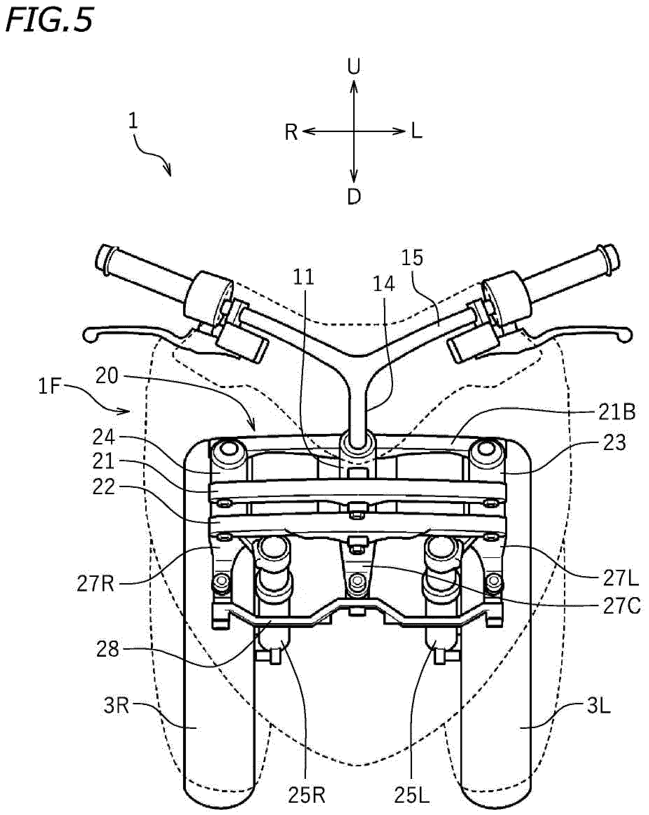

A leaning vehicle according to one embodiment will now be described with reference to the drawings. FIG. 1 is a left side view showing a leaning vehicle 1 according to the present embodiment. FIG. 2 is a left side view showing a main part of the leaning vehicle 1. FIG. 3 is a left side view showing a part of a front portion 1F of the leaning vehicle 1. FIG. 4 is a front view showing a part of the front portion 1F of the leaning vehicle 1. FIG. 5 is a plan view showing a part of the front portion 1F of the leaning vehicle 1.

The terms front, rear, left, right, up and down, as used in the description below, refer to these directions as viewed from a virtual rider seated on a seat 5 while the leaning vehicle 1 is standing upright (upright as used herein refers to a position where a vehicle body frame 10 to be described below is standing upright) on a horizontal surface with no rider and no load thereon, unless specified otherwise. The designations F, B, L, R, U and D, as used in the figures, refer to front, rear, left, right, up and down, respectively. The vehicle up-down direction coincides with the vertical direction. The vehicle front-rear direction is orthogonal to the vehicle up-down direction. The vehicle left-right direction is orthogonal to the vehicle front-rear direction and the vehicle up-down direction.

The term "forward" refers not only to the direction that extends in the front direction along the vehicle front-rear direction, but also to directions that are inclined from that direction by an angle that is less than 90 degrees. The term "rearward" refers not only to the direction that extends rearward along the vehicle front-rear direction, but also to directions that are inclined from that direction by an angle that is less than 90 degrees. The term "leftward" refers not only to the direction that extends leftward along the vehicle left-right direction, but also to directions that are inclined from that direction by an angle that is less than 90 degrees. The term "rightward" refers not only to the direction that extends rightward along the vehicle left-right direction, but also to directions that are inclined from that direction by an angle that is less than 90 degrees. The term "upward" refers not only to the direction that extends upward along the vehicle up-down direction, but also to directions that are inclined from that direction by an angle that is less than 90 degrees. The term "downward" refers not only to the direction that extends downward along the vehicle up-down direction, but also to directions that are inclined from that direction by an angle that is less than 90 degrees.

As shown in FIG. 1 and FIG. 2, the leaning vehicle 1 includes the vehicle body frame 10, a link mechanism 20, a left front wheel 3L, a right front wheel 3R (see FIG. 4), a rear wheel 4, a power unit 2, the seat 5, a storage box 40, and an inertial measurement unit (hereinafter referred to as IMU) 6. The leaning vehicle 1 is a three-wheeled vehicle including two front wheels 3L, 3R and one rear wheel 4.

As shown in FIG. 2, the vehicle body frame 10 includes a head pipe 11, a down frame 12 extending rearward and downward from the head pipe 11, and a seat frame 13 extending rearward from the down frame 12. As shown in FIG. 4, a steering shaft 14 is rotatably supported on the head pipe 11. A handle bar 15 is fixed to the steering shaft 14.

The link mechanism 20 is a link mechanism of the parallel four-section link (parallelogram link) system. The link mechanism 20 is arranged upward relative to the left front wheel 3L and the right front wheel 3R. The link mechanism 20 includes an upper arm 21, a lower arm 22, a left side member 23 and a right side member 24.

The upper arm 21 and the lower arm 22 extend leftward and rightward. The lower arm 22 is arranged downward of the upper arm 21. The upper arm 21 and the lower arm 22 are arranged forward of the head pipe 11 (see FIG. 2). The upper arm 21 is supported on the head pipe 11 so that the upper arm 21 can rotate about the first axis 21 Cc extending in the vehicle front-rear direction. The lower arm 22 is supported on the head pipe 11 so that the lower arm 22 can rotate about the second axis 22Cc extending in the vehicle front-rear direction.

In the present embodiment, another lower arm 22B is arranged rearward of the head pipe 11 as shown in FIG. 2. The lower arm 22B extends leftward and rightward. The lower arm 22B is arranged downward of the upper arm 21. As is the lower arm 22, the lower arm 22B is supported on the head pipe 11 so that the lower arm 22B can rotate about the second axis 22Cc extending in the vehicle front-rear direction. Note that another upper arm that is supported on the head pipe 11 so that the upper arm can rotate about the first axis 21 Cc may be arranged rearward of the head pipe 11. Note however that the other upper arm and the other lower arm 22B arranged rearward of the head pipe 11 are not essential.

As shown in FIG. 4, the left side member 23 and the right side member 24 extend upward and downward. The left side member 23 is arranged leftward of the head pipe 11, and the right side member 24 is arranged rightward of the head pipe 11. The right side member 24 is arranged rightward of the left side member 23. The left side member 23 and the right side member 24 are arranged rearward of the upper arm 21 and the lower arm 22. The left side member 23 and the right side member 24 are arranged forward of the lower arm 22B. The left side member 23 and the right side member 24 are rotatably supported on the upper arm 21, the lower arm 22 and the lower arm 22B.

Specifically, the upper end portion of the left side member 23 is supported on the left end portion of the upper arm 21 so that the left side member 23 can rotate about the third axis 21Lc extending in the vehicle front-rear direction. The lower end portion of the left side member 23 is supported on the left end portion of the lower arm 22 and the left end portion of the lower arm 22B so that the left side member 23 can rotate about the fourth axis 22Lc extending in the vehicle front-rear direction. The upper end portion of the right side member 24 is supported on the right end portion of the upper arm 21 so that the right side member 24 can rotate about the fifth axis 21Rc extending in the vehicle front-rear direction. The lower end portion of the right side member 24 is supported on the right end portion of the lower arm 22 and the right end portion of the lower arm 22B so that the right side member 24 can rotate about the sixth axis 22Rc extending in the vehicle front-rear direction.

The leaning vehicle 1 includes a left suspension 25L and a right suspension 25R as front suspensions. In the present embodiment, the left suspension 25L and the right suspension 25R are telescopic suspensions. The upper end portion of the left suspension 25L and the upper end portion of the right suspension 25R are connected to the link mechanism 20. The lower end portion of the left suspension 25L is connected to the left front wheel 3L, and the lower end portion of the right suspension 25R is connected to the right front wheel 3R. Specifically, the upper end portion of the left suspension 25L is connected to the lower end portion of the left side member 23 via a left bracket 26L. The upper end portion of the left suspension 25L is connected to the left side member 23 so that the left suspension 25L can rotate in the left-right direction of the vehicle body frame 10. The upper end portion of the right suspension 25R is connected to the lower end portion of the right side member 24 via a right bracket 26R. The upper end portion of the right suspension 25R is connected to the right side member 24 so that the right suspension 25R can rotate in the left-right direction of the vehicle body frame 10.

A center plate 27C is connected to the lower end portion of the steering shaft 14. As shown in FIG. 5, the center plate 27C extends forward from the steering shaft 14. A left plate 27L is fixed to the left bracket 26L. A right plate 27R is fixed to the right bracket 26R. The left plate 27L, the center plate 27C and the right plate 27R are connected to a tie rod 28 so that they can rotate left and right. The steering shaft 14 is linked to the left side member 23 and the right side member 24 via the center plate 27C, the tie rod 28, the left plate 27L and the right plate 27R.

As shown in FIG. 3, the leaning vehicle 1 includes the roll angle control device 30 that controls the roll angle. Note that the roll angle control device 30 is not shown in figures other than FIG. 3. The roll angle control device 30 controls the roll angle of the vehicle body frame 10 by adjusting the rotation of the upper arm 21 and the lower arm 22 relative to the vehicle body frame 10. The roll angle control device 30 is configured to give a torque to at least one of the upper arm 21 and the lower arm 22. The roll angle control device 30 is connected to at least one of the upper arm 21 and the lower arm 22 and to the vehicle body frame 10. In the present embodiment, the roll angle control device 30 is connected to the upper arm 21 and the head pipe 11.

The roll angle control device 30 includes an actuator 31 that outputs a torque for rotating the upper arm 21 and the lower arm 22 relative to the vehicle body frame 10. The actuator 31 is connected to the head pipe 11 via a support member 32. The actuator 31 includes a motor 33, which is a power source, and an output shaft 34 that outputs the torque of the motor 33 to the upper arm 21. The output shaft 34 is a rotation shaft that rotates by being driven by the motor 33, and is connected to the upper arm 21. The motor 33 and the output shaft 34 are connected together by a decelerator including a gear 35A and a gear 35B. An output shaft 33a of the motor 33 meshes with the gear 35A. The gear 35B meshes with the gear 35A. The output shaft 34 is fixed to the gear 35B. The torque of the motor 33 is transmitted to the upper arm 21 via the gear 35A, the gear 35B and the output shaft 34. As the motor 33 is driven, a torque about the first axis 21Cc (see FIG. 4) is given to the upper arm 21.

The roll angle control device 30 includes a control device 36 that controls the actuator 31. The control device 36 is communicably connected to the IMU 6. In the present embodiment, the control device 36 is connected to the IMU 6 via a harness (not shown). The control device 36 is configured to receive signals from the IMU 6 and control the actuator 31. For example, the control device 36 may be a control circuit mounted on a substrate, or a computer including a processor and a memory. The control device 36 may be built in the actuator 31. The control device 36 may be provided outside the actuator 31. The control device 36 may be an electronic control unit, for example.

As shown in FIG. 2, the power unit 2 is pivotally supported on the vehicle body frame 10. The power unit 2 is connected to the rear wheel 4 so that power can be transmitted therebetween. The power unit 2 generates driving power for travelling. The power unit 2 gives power to the rear wheel 4. The power unit 2 may include an internal combustion engine or may include an electric motor. In the present embodiment, the power unit 2 includes an internal combustion engine.

As shown in FIG. 1 and FIG. 2, the seat 5 is arranged rearward of the head pipe 11. The seat 5 is arranged rearward of the link mechanism 20. The seat 5 is supported on the seat frame 13 of the vehicle body frame 10.

The storage box 40 is arranged downward of the seat 5. The storage box 40 is arranged rearward of the link mechanism 20. The storage box 40 is supported on the seat frame 13 of the vehicle body frame 10.

The leaning vehicle 1 includes left and right rear suspensions 50. The left rear suspension 50 is arranged leftward of the rear wheel 4, and the right rear suspension 50 is arranged rightward of the rear wheel 4. Each rear suspension 50 includes an upper support portion 51 that is supported on the vehicle body frame 10 so that it can pivot about a first pivot center 51c, and a lower support portion 52 that is supported on the rear wheel 4 so that it can pivot about a second pivot center 52c. Here, the upper support portion 51 is pivotally supported on the seat frame 13 via a bracket 13B. The lower support portion 52 is pivotally supported on a bracket 4B attached to the axle of the rear wheel 4. The rear suspensions 50 extend substantially in the vertical direction as the vehicle is viewed from the side. Specifically, the rear suspensions 50 are arranged so that the line segment M50 that connects between the first pivot center 51c and the second pivot center 52c coincides with the vertical line or is inclined by an angle of 10 degrees or less forward or rearward relative to the vertical line as the vehicle is viewed from the side.

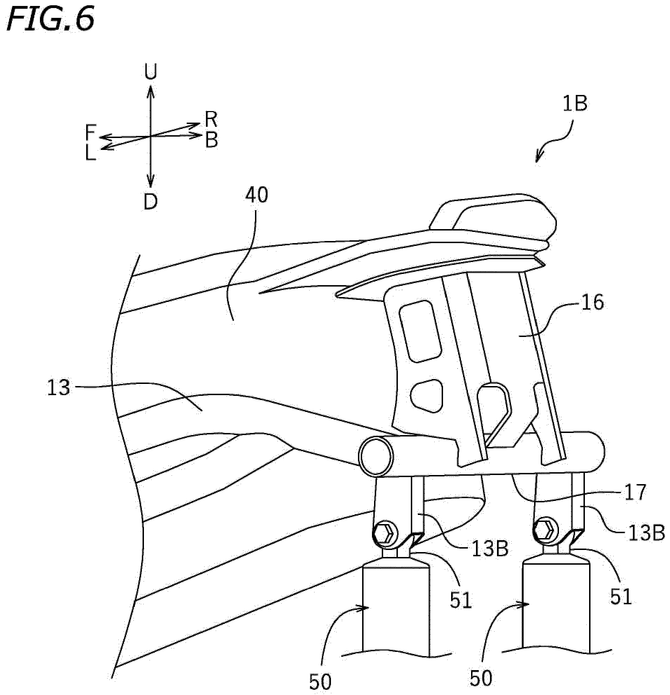

As shown in FIG. 6, the vehicle body frame 10 includes a support frame 16 arranged rearward of the storage box 40. The support frame 16 extends upward. The vehicle body frame 10 includes a cross member 17 that connects between the rear end portion of the left seat frame 13 and the rear end portion of the right seat frame 13. The cross member 17 extends in the vehicle left-right direction. The support frame 16 is fixed to the cross member 17.

As shown in FIG. 2, the IMU 6 is supported on the support frame 16. IMUs well known in the art can suitably be used as the IMU 6. The IMU 6 detects the angle or angular velocity and the acceleration for three axes.

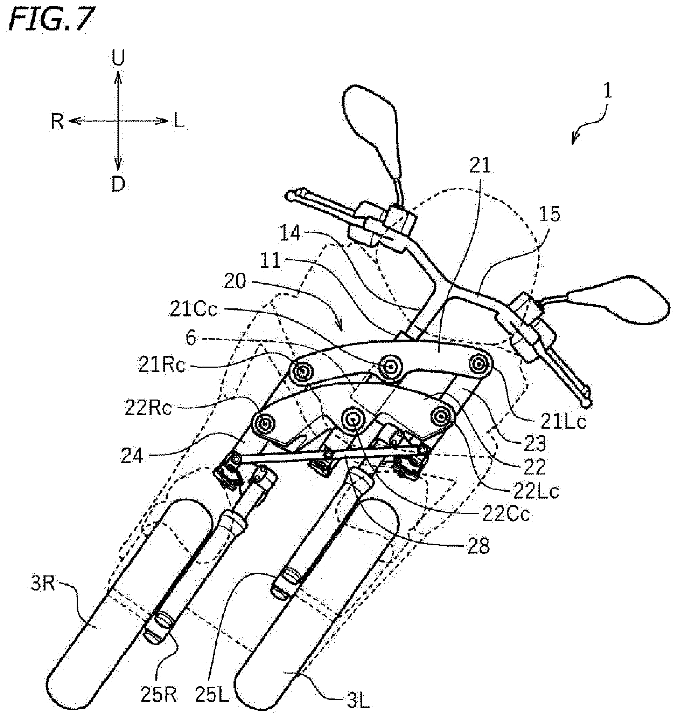

When the vehicle body frame 10 leans leftward or rightward as shown in FIG. 7, the position of the link mechanism 20 relative to the vehicle body frame 10 changes. In the present embodiment, the IMU 6 is arranged close to the link mechanism 20 for the vehicle left-right direction and the vehicle up-down direction. On the other hand, the IMU 6 is arranged far away from the link mechanism 20 for the vehicle front-rear direction. The IMU 6 is arranged relatively rearward. As shown in FIG. 2, the link mechanism 20 is arranged in the front portion 1F of the leaning vehicle 1, but the IMU 6 is arranged in a rear portion 1B of the leaning vehicle 1.

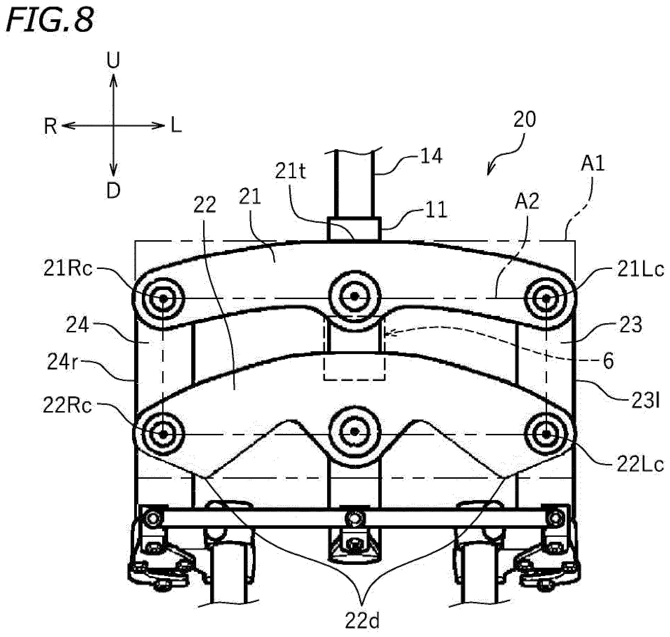

FIG. 8 shows the positional relationship between the link mechanism 20 and the IMU 6 as the vehicle is viewed from the front while the leaning vehicle 1 is standing upright (see FIG. 4). As shown in FIG. 8, while the leaning vehicle 1 standing upright, the IMU 6 is arranged downward relative to the upper end 21t of the upper arm 21, upward relative to the lower end 22d of the lower arm 22, rightward relative to the left end 23I of the left side member 23, and leftward relative to the right end 24r of the right side member 24. As the vehicle is viewed from the front while the leaning vehicle 1 is standing upright, the IMU 6 is arranged inside a rectangle A1 that is delimited by the horizontal line passing through the upper end 21t of the upper arm 21, the horizontal line passing through the lower end 22d of the lower arm 22, the vertical line passing through the left end 23I of the left side member 23, and the vertical line passing through the right end 24r of the right side member 24. As the vehicle is viewed from the front while the leaning vehicle 1 is standing upright, the IMU 6 may be arranged inside a rectangle A2 that is delimited by the center of rotation (i.e., the third axis 21Lc) for the left side member 23 of the upper arm 21, the center of rotation (i.e., the fifth axis 21Rc) for the right side member 24 of the upper arm 21, the center of rotation (i.e., the sixth axis 22Rc) for the right side member 24 of the lower arm 22, and the center of rotation (i.e., the fourth axis 22Lc) for the left side member 23 of the lower arm 22. As shown in FIG. 7, the IMU 6 may be arranged inside the rectangle A2 even when the vehicle body frame 10 is tilted.

For the vehicle front-rear direction, the IMU 6 is arranged rearward relative to the front end 5f of the seat 5 (see FIG. 1). As shown in FIG. 2, in the present embodiment, the IMU 6 is arranged rearward relative to the power unit 2. The IMU 6 is arranged rearward of the storage box 40. The IMU 6 is arranged rearward relative to the center 4c of the rear wheel 4. The IMU 6 is arranged rearward relative to the first pivot center 51c of the rear suspension 50 as the vehicle is viewed from the side. The IMU 6 is arranged rearward relative to the second pivot center 52c of the rear suspension 50 as the vehicle is viewed from the side. The IMU 6 is arranged at a position that is off the straight line L50 passing through the first pivot center 51c and the second pivot center 52c as the vehicle is viewed from the side. That is, the IMU 6 is arranged at a position that does not intersect with the straight line L50 as the vehicle is viewed from the side. Here, the IMU 6 is arranged rearward relative to the straight line L50 as the vehicle is viewed from the side.

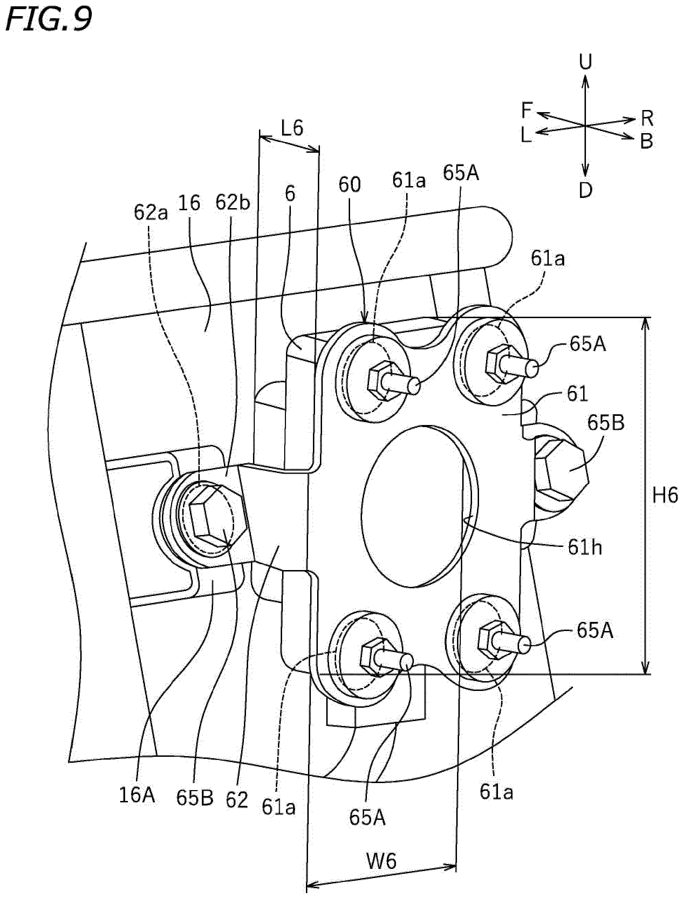

There is no particular limitation on the configuration used to attach the IMU 6 to the support frame 16. For example, as shown in FIG. 9, the IMU 6 may be attached to the support frame 16 via a bracket 60. In the present embodiment, the IMU 6 is fixed to the bracket 60, and the bracket 60 is fixed to the support frame 16.

The bracket 60 includes a plate-shaped main portion 61 extending downward, and left and right arm portions 62 extending forward from the main portion 61. While a hole 61h is formed in the central portion of the main portion 61, the hole 61h is not essential. First bolt holes 61a are formed in the upper left portion, the lower left portion, the upper right portion and the lower right portion of the main portion 61. The left arm portion 62 extends forward from the left edge portion of the main portion 61. The right arm portion 62 extends forward from the right edge portion of the main portion 61. The front end portion 62b of the left arm portion 62 is bent leftward. The front end portion 62b of the right arm portion 62 is bent rightward. The second bolt hole 62a is formed in the front end portion 62b of the arm portion 62.

The IMU 6 is fixed to the bracket 60 by first bolts 65A. The first bolts 65A are inserted through the first bolt holes 61a of the main portion 61 of the bracket 60. The first bolts 65A fix the IMU 6 to the bracket 60. The support frame 16 includes stays 16A in which bolt holes are formed. The bracket 60 is fixed to the stays 16A by second bolts 65B. The second bolts 65B are inserted through the second bolt holes 62a of arm portions 62 of the bracket 60 and the bolt holes of the stays 16A. The second bolts 65B fix the bracket 60 to the support frame 16. The first bolts 65A and the second bolts 65B are so-called rubber mount bolts. A rubber is present between the IMU 6 and the bracket 60. A rubber is present between the bracket 60 and the support frame 16. Thus, vibrations of the support frame 16 are unlikely to be transmitted to the IMU 6. Note however that there is no particular limitation on the type of the first bolts 65A and the second bolts 65B.

The IMU 6 is arranged between the support frame 16 and the main portion 61 of the bracket 60. That is, the IMU 6 is arranged rearward of the support frame 16 and forward of the main portion 61. A gap is provided between the support frame 16 and the IMU 6.

In the present embodiment, the IMU 6 is arranged in an upright position. The IMU 6 is arranged so that the dimension H6 of the IMU 6 in the vehicle up-down direction is greater than the dimension L6 in the vehicle front-rear direction. The IMU 6 is arranged so that the dimension H6 of the IMU 6 in the vehicle up-down direction is greater than the dimension W6 in the vehicle left-right direction.

Since the leaning vehicle 1 according to the present embodiment includes the roll angle control device 30, it is possible to control the roll angle while travelling and while the leaning vehicle 1 is standing still. There is no particular limitation on the control performed by the roll angle control device 30. The roll angle control device 30 can execute a self-supporting control as described below, for example.

A self-supporting control is a control for maintaining the vehicle body frame 10 in an upright position while the leaning vehicle 1 is standing still, for example, at a traffic light. For example, when the rider shifts weight leftward while the leaning vehicle 1 is standing still, a force that causes the vehicle body frame 10 to tilt leftward is applied to the vehicle body frame 10. Therefore, the vehicle body frame 10 tilts leftward. The control device 36 detects the tilt of the vehicle body frame 10 based on a signal from the IMU 6. Upon detecting the tilt of the vehicle body frame 10, the control device 36 controls the actuator 31 so as to cancel out the tilt. Specifically, the control device 36 controls the motor 33 so that the roll angle of the vehicle body frame 10 becomes zero. While standing still, the rider seated on the seat 5 uses both feet to maintain the leaning vehicle 1 in an upright position. While standing still, with the roll angle control device 30 executing such a self-supporting control, the rider seated on the seat 5 can maintain the leaning vehicle 1 in an upright position with little force.

As described above, with the leaning vehicle 1 according to the present embodiment, the control device 36 receives a signal from the IMU 6 to control the actuator 31, thereby rotating the upper arm 21 and the lower arm 22 of the link mechanism 20 relative to the vehicle body frame 10. With the leaning vehicle 1 according to the present embodiment, it is possible to control the roll angle of the vehicle body frame 10.

Possible choices as the sensor for detecting the roll angle of the vehicle body frame 10 include a rotation sensor that detects the relative rotation of the upper arm 21 and the lower arm 22 with respect to the vehicle body frame 10 or a rotation sensor that detects the rotation of a rotor of the motor 33. However, such a rotation sensor needs to be connected directly to the upper arm 21 or the lower arm 22 or connected directly to the motor 33. Since the rotation sensor needs to be arranged in the vicinity of the link mechanism 20, the rotation sensor needs to be arranged in the front portion 1F of the leaning vehicle 1. On the other hand, it is not essential that the IMU 6 be arranged in the vicinity of the link mechanism 20.

The IMU 6 may be arranged in the front portion 1F of the vehicle. However, when the IMU 6 is arranged in the front portion 1F of the vehicle, the IMU 6 may be affected by heat or vibrations from the motor 33. Even when the IMU 6 is arranged in a portion other than the front portion 1F of the vehicle, the IMU 6 may be susceptible to vibrations and noise from the power unit 2 or vibrations from the road surface, depending on the position in the vehicle left-right direction or the position in the vehicle up-down direction the IMU 6. As a result, the detection precision of the IMU 6 may lower.

In the present embodiment, however, the IMU 6 is arranged downward relative to the upper end 21t of the upper arm 21, upward relative to the lower end 22d of the lower arm 22, rightward relative to the left end 23I of the left side member 23, leftward relative to the right end 24r of the right side member 24, and rearward relative to the front end 5f of the seat 5. While the IMU 6 is arranged close to the link mechanism 20 for the vehicle left-right direction and the vehicle up-down direction, the IMU 6 is arranged far away from the link mechanism 20 for the vehicle front-rear direction. The IMU 6 is not arranged in the front portion 1F of the leaning vehicle 1. Therefore, with the leaning vehicle 1 according to the present embodiment, it is possible to desirably detect the tilt of the vehicle body frame 10 by the IMU 6 while preventing the front portion 1F of the vehicle from becoming larger and more complicated.

According to the present embodiment, the IMU 6 is arranged rearward relative to the power unit 2. The IMU 6 is arranged rearward relative to the center 4c of the rear wheel 4. The IMU 6 is arranged rearward of the storage box 40. The IMU 6 is unlikely to be affected by heat and vibrations from the power unit 2. Thus, it is possible to desirably detect the tilt of the vehicle body frame 10 while preventing the front portion 1F of the vehicle from becoming larger and more complicated.

According to the present embodiment, the IMU 6 is arranged rearward relative to the first pivot center 51c of the rear suspension 50 as the vehicle is viewed from the side. The IMU 6 is arranged rearward relative to the second pivot center 52c of the rear suspension 50 as the vehicle is viewed from the side. The IMU 6 is arranged at a position that is off a straight line 50L passing through the first pivot center 51c and the second pivot center 52c as the vehicle is viewed from the side. According to the present embodiment, it is possible to reduce the influence of stretching/contraction of the rear suspension 50 on the IMU 6. It is possible to desirably detect the tilt of the vehicle body frame 10 while preventing the front portion 1F of the vehicle from becoming larger and more complicated.

According to the present embodiment, the IMU 6 is fixed to the support frame 16 via the bracket 60. By attaching the IMU 6 to the bracket 60 and then fixing the bracket 60 to the support frame 16, it is possible to easily assemble the IMU 6 to the vehicle body frame 10.

According to the present embodiment, the bracket 60 includes the plate-shaped main portion 61 extending downward, and the arm portion 62 extending forward from the main portion 61. The IMU 6 is fixed to the main portion 61 by the first bolts 65A inserted through the first bolt holes 61a formed in the main portion 61. The bracket 60 is fixed to the support frame 16 by the second bolts 65B inserted through the second bolt holes 62a formed in the arm portion 62. The IMU 6 is arranged between the support frame 16 and the main portion 61. According to the present embodiment, the IMU 6 can be desirably assembled to the vehicle body frame 10.

According to the present embodiment, the IMU 6 is arranged so that the dimension H6 of the IMU 6 in the vehicle up-down direction is greater than the dimension L6 thereof in the vehicle front-rear direction. Since the dimension L6 of the IMU 6 in the vehicle front-rear direction is relatively small, the IMU 6 can be arranged in a compact arrangement in the rear portion 1B of the vehicle. It is possible to prevent the rear portion 1B of the vehicle from becoming large in the vehicle front-rear direction.

According to the present embodiment, the roll angle control device 30 executes a self-supporting control. The control device 36 is configured to control the actuator 31 so that the vehicle body frame 10 is in an upright position while the leaning vehicle 1 is standing still. According to the present embodiment, the rider can stably maintain the attitude while the leaning vehicle 1 is standing still, for example, at a traffic light.

While one embodiment has been described above, the embodiment described above is merely an example. Various other embodiments are possible. Other embodiments will now be described briefly.

The upper arm 21 and the lower arm 22 of the link mechanism 20 are not limited to a curved shape as the vehicle is viewed from the front, but may be in a straight shape as the vehicle is viewed from the front. The upper arm 21 and the lower arm 22 are not limited to plate-shaped arms.

In the embodiment described above, the actuator 31 is connected to the upper arm 21 and configured to transmit the torque of the motor 33 to the upper arm 21. However, the actuator 31 may be connected to the lower arm 22 and configured to transmit the torque of the motor 33 to the lower arm 22. The actuator 31 may be connected to both of the upper arm 21 and the lower arm 22 and configured to transmit the torque of the motor 33 to both of the upper arm 21 and the lower arm 22.

The arrangement of the IMU 6 of the embodiment described above is merely an example. According to the invention IMU 6 is arranged rearward relative to the center 4c of the rear wheel 4. The IMU 6 may be arranged forward relative to the first pivot center 51c as the vehicle is viewed from the side. The IMU 6 is arranged forward relative to the second pivot center 52c as the vehicle is viewed from the side. The IMU 6 may be arranged on the straight line L50 passing through the first pivot center 51c and the second pivot center 52c as the vehicle is viewed from the side. The IMU 6 may be arranged forward relative to the rear end of the storage box 40.

The IMU 6 may be arranged rearward of the main portion 61 of the bracket 60. There is no limitation on the shape of the bracket 60 to which the IMU 6 is attached. The stay 16A present between the bracket 60 and the support frame 16 is not essential. The bracket 60 may be directly attached to the support frame 16. The bracket 60 may be omitted by directly attaching the IMU 6 to the support frame 16. The IMU 6 may be supported on a part of the vehicle body frame 10 other than the support frame 16. The support frame 16 is not essential.

The IMU 6 may be arranged so that the dimension H6 in the vehicle up-down direction is less than or equal to the dimension L6 in the vehicle front-rear direction. The IMU 6 may be arranged so that the dimension H6 in the vehicle up-down direction is less than or equal to the dimension W6 in the vehicle left-right direction.

The arrangement of the rear suspension 50 of the embodiment described above is merely an example. The rear suspension 50 may be arranged so that line segment M50 that connects between the first pivot center 51c and the second pivot center 52c is inclined by an angle of 10 degrees or more relative to the vertical line as the vehicle is viewed from the side.

### Reference Signs List

1: Leaning vehicle, 2: Power unit, 3L: Left front wheel, 3R: Right front wheel, 4: Rear wheel, 5: Seat, 6: Inertial measurement unit, 10: Vehicle body frame, 11: Head pipe, 16: Support frame, 20: Link mechanism, 21: Upper arm, 21Cc: First axis, 21Lc: Third axis, 21Rc: Fifth axis, 22: Lower arm, 22Cc: Second axis, 22Lc: Fourth axis, 22Rc: Sixth axis, 23: Left side member, 24: Right side member, 31: Actuator, 36: Control device, 40: Storage box, 50: Rear suspension, 51: Upper support portion, 51c: First pivot center, 52: Lower support portion, 52c: Second pivot center, 60: Bracket, 61: Main portion, 61a: First bolt hole, 62: Arm portion, 62a: Second bolt hole, 65A: First bolt, 65B: Second bolt

## Claims

1. A leaning vehicle (1) comprising:
a vehicle body frame (10);
a link mechanism (20) supported on the vehicle body frame (10);
a left front wheel (3L) supported on the link mechanism (20);
a right front wheel (3R) supported on the link mechanism (20) and arranged rightward of the left front wheel (3L) in a vehicle left-right direction;
a rear wheel (4) supported on the vehicle body frame (10) and arranged rearward relative to the left front wheel (3L) and the right front wheel (3R) in a vehicle front-rear direction; and
a seat (5) supported on the vehicle body frame (10) and arranged rearward relative to the link mechanism (20) in the vehicle front-rear direction, wherein:
the link mechanism (20) includes:
an upper arm (21) supported on the vehicle body frame (10) so that the upper arm (21) is rotatable about a first axis (21Cc) extending in the vehicle front-rear direction, and extending leftward and rightward in the vehicle left-right direction;
a lower arm (22) supported on the vehicle body frame (10) so that the lower arm (22) is rotatable about a second axis (22Cc) extending in the vehicle front-rear direction, extending leftward and rightward in the vehicle left-right direction, and arranged downward of the upper arm (21) in a vehicle up-down direction;
a left side member (23) connected to the upper arm (21) so that the left side member (23) is rotatable about a third axis (21Lc) extending in the vehicle front-rear direction, connected to the lower arm (22) so that the left side member (23) is rotatable about a fourth axis (22Lc) extending in the vehicle front-rear direction, and extending upward and downward in the vehicle up-down direction; and
a right side member (24) supported on the upper arm (21) so that the right side member (24) is rotatable about a fifth axis (21Rc) extending in the vehicle front-rear direction, supported on the lower arm (22) so that the right side member (24) is rotatable about a sixth axis (22Rc) extending in the vehicle front-rear direction, extending upward and downward in the vehicle up-down direction, and arranged rightward of the left side member (23) in the vehicle left-right direction, the leaning vehicle (1) comprising:
an actuator (31) connected to the vehicle body frame (10) and at least one of the upper arm (21) and the lower arm (22), and configured to generate a torque that rotates the upper arm (21) and the lower arm (22) relative to the vehicle body frame (10);
an inertial measurement unit (6) supported on the vehicle body frame (10), and arranged downward relative to an upper end (21t) of the upper arm (21) and upward relative to a lower end (22d) of the lower arm (22) in the vehicle up-down direction, and rearward relative to a front end (5f) of the seat (5) in the vehicle front-rear direction; and
a control device (36) configured to receive a signal from the inertial measurement unit (6) to control the actuator (31), **characterized in that** the inertial measurement unit (6) is arranged rightward relative to a left end (23l) of the left side member (23) and leftward relative to a right end (24r) of the right side member (24) in the vehicle left-right direction, wherein the inertial measurement unit (6) is arranged rearward relative to a center of the rear wheel (4) in the vehicle front-rear direction.

2. The leaning vehicle (1) according to claim 1, **characterized by:**
a power unit (2) pivotally supported on the vehicle body frame (10) and connected to the rear wheel (4) so that power can be transmitted therebetween,
wherein the inertial measurement unit (6) is arranged rearward relative to the power unit (2) in the vehicle front-rear direction.

3. The leaning vehicle (1) according to claim 1 or 2, **characterized by** a rear suspension (50) including an upper support portion (51) supported on the vehicle body frame (10) so that the upper support portion (51) is pivotable about a first pivot center (51c), and a lower support portion (52) supported on the rear wheel (4) so that the lower support portion (52) is pivotable about a second pivot center (52c).

4. The leaning vehicle (1) according to claim 3, **characterized in that** the inertial measurement unit (6) is arranged rearward relative to the first pivot center (51c) in the vehicle front-rear direction as the vehicle is viewed from the side.

5. The leaning vehicle (1) according to claim 3 or 4, **characterized in that** the inertial measurement unit (6) is arranged rearward relative to the second pivot center (52c) in the vehicle front-rear direction as the vehicle is viewed from the side.

6. The leaning vehicle (1) according to any one of claims 3 to 5, **characterized in that** the inertial measurement unit (6) is arranged at a position that is off a straight line (50L) passing through the first pivot center (51c) and the second pivot center (52c) as the vehicle is viewed from the side.

7. The leaning vehicle (1) according to any one of claims 3 to 6, **characterized in that** the rear suspension (50) is arranged so that a line segment (M50) that connects together the first pivot center (51c) and the second pivot center (52c) coincides with a vertical line of the vehicle or is inclined by an angle of 10 degrees or less relative to the vertical line of the vehicle as the vehicle is viewed from the side.

8. The leaning vehicle (1) according to any one of claims 1 to 7, **characterized by:**
a storage box (40) supported on the vehicle body frame (10) and arranged downward of the seat (5) in the vehicle up-down direction,
wherein the inertial measurement unit (6) is arranged rearward of the storage box (40) in the vehicle front-rear direction.

9. The leaning vehicle (1) according to any one of claims 1 to 8, **characterized in that** the vehicle body frame (10) includes a support frame (16) arranged rearward of the storage box (40) in the vehicle front-rear direction; and
the leaning vehicle (1) includes a bracket (60) fixed to the support frame (16) and attached to the inertial measurement unit (6).

10. The leaning vehicle (1) according to claim 9, **characterized in that** the bracket (60) includes a plate-shaped main portion (61) having a first bolt hole (61a) formed therein and extending downward in the vehicle up-down direction, and an arm portion (62) having a second bolt hole (62a) formed therein and extending forward from the main portion (61) in the vehicle front-rear direction, the leaning vehicle (1) comprising:
a first bolt (65A) inserted through the first bolt hole (61a) and fixing the inertial measurement unit (6) to the bracket (60); and
a second bolt (65B) inserted through the second bolt hole (62a) and fixing the bracket (60) to the support frame (16); and
the inertial measurement unit (6) is arranged between the support frame (16) and the main portion (61) of the bracket (60).

11. The leaning vehicle (1) according to any one of claims 1 to 10, **characterized in that** the inertial measurement unit (6) is arranged so that a dimension (H6) of the inertial measurement unit (6) in the vehicle up-down direction is greater than a dimension (L6) of the inertial measurement unit (6) in the vehicle front-rear direction.

12. The leaning vehicle (1) according to any one of claims 1 to 11, **characterized in that** the control device (36) is configured to control the actuator (31) so that the vehicle body frame (10) is in an upright position while the leaning vehicle (1) is standing still.

## Patentansprüche

1. Ein Neige-Fahrzeug (1), das umfasst:
einen Fahrzeugkörperrahmen (10);
einen Lenkermechanismus (20), der an dem Fahrzeugkörperrahmen (10) gelagert ist;
ein linkes Vorderrad (3L), das an dem Lenkermechanismus (20) gelagert ist;
ein rechtes Vorderrad (3R), das an dem Lenkermechanismus (20) gelagert ist und in einer Fahrzeug-Links-Rechts-Richtung rechts vom linken Vorderrad (3L) angeordnet ist;
ein Hinterrad (4), das an dem Fahrzeugkörperrahmen (10) gelagert ist und relativ zu dem linken Vorderrad (3L) und dem rechten Vorderrad (3R) in einer Fahrzeug-Vorder-Rück-Richtung nach hinten angeordnet ist; und
einen Sitz (5), der an dem Fahrzeugkörperrahmen (10) gelagert ist und relativ zu dem Lenkermechanismus (20) in der Fahrzeug-Vorder-Rück-Richtung nach hinten angeordnet ist, wobei:
der Lenkermechanismus (20) umfasst:
einen oberen Arm (21), der auf dem Fahrzeugkörperrahmen (10) gelagert ist, so dass der obere Arm (21) um eine erste Achse (21Cc) drehbar ist, die sich in der Fahrzeug-Vorder-Rück-Richtung erstreckt, und sich nach links und rechts in der Fahrzeug-Links-Rechts-Richtung erstreckt;
einen unteren Arm (22), der an dem Fahrzeugkörperrahmen (10) gelagert ist, so dass der untere Arm (22) um eine zweite Achse (22Cc) drehbar ist, die sich in der Fahrzeug-Vorder-Rück-Richtung erstreckt, und sich nach links und nach rechts in der Fahrzeug-Links-Rechts-Richtung erstreckt und in einer Fahrzeug-Aufwärts-Abwärts-Richtung unter dem oberen Arm (21) angeordnet ist;
ein linkes Seitenelement (23), das mit dem oberen Arm (21) verbunden ist, so dass das linke Seitenelement (23) um eine dritte Achse (21Lc) drehbar ist, die sich in der Fahrzeug-Vorder-Rück-Richtung erstreckt, mit dem unteren Arm (22) verbunden ist, so dass das linke Seitenelement (23) um eine vierte Achse (22Lc) drehbar ist, die sich in der Fahrzeug-Vorder-Rück-Richtung erstreckt, und das sich in der Fahrzeug-Aufwärts-Abwärts-Richtung nach oben und unten erstreckt; und
ein rechtes Seitenelement (24), das an dem oberen Arm (21) gelagert ist, so dass das rechte Seitenelement (24) um eine fünfte Achse (21Rc) drehbar ist, die sich in der Fahrzeug-Vorder-Rück-Richtung erstreckt, und das an dem unteren Arm (22) gelagert ist, so dass das rechte Seitenelement (24) um eine sechste Achse (22Rc) drehbar ist, die sich in der Fahrzeug-Vorder-Rück-Richtung erstreckt, und das sich in der Fahrzeug-Aufwärts-Abwärts-Richtung nach oben und unten erstreckt, und das in der Fahrzeug-Links-Rechts-Richtung rechts von dem linken Seitenelement (23) angeordnet ist, wobei das Neige-Fahrzeug (1) umfasst:
einen Aktuator (31), der mit dem Fahrzeugkörperrahmen (10) und zumindest einem von dem oberen Arm (21) und dem unteren Arm (22) verbunden ist und konfiguriert ist, um ein Drehmoment zu erzeugen, das den oberen Arm (21) und den unteren Arm (22) relativ zu dem Fahrzeugkörperrahmen (10) dreht;
eine Trägheitsmesseinheit (6), die an dem Fahrzeugkörperrahmen (10) gelagert ist und in Bezug auf ein oberes Ende (21t) des oberen Arms (21) nach unten und in Bezug auf ein unteres Ende (22d) des unteren Arms (22) nach oben in der Fahrzeug-Aufwärts/Abwärts-Richtung und in Bezug auf ein vorderes Ende (5f) des Sitzes (5) nach hinten in der Fahrzeug-Vorder-Hinter-Richtung angeordnet ist; und
eine Steuervorrichtung (36), die konfiguriert ist, um ein Signal von der Trägheitsmesseinheit (6) zu empfangen, um das Stellglied (31) zu steuern, **dadurch gekennzeichnet, dass**
die Trägheitsmesseinheit (6) relativ zu einem linken Ende (23l) des linken Seitenelements (23) nach rechts und relativ zu einem rechten Ende (24r) des rechten Seitenelements (24) nach links in der Links-Rechts-Richtung des Fahrzeugs angeordnet ist, wobei die Trägheitsmesseinheit (6) relativ zu einer Mitte des Hinterrads (4) in der Vorder-Hinter-Richtung des Fahrzeugs nach hinten angeordnet ist.

2. Das Neige-Fahrzeug (1) gemäß Anspruch 1, **gekennzeichnet durch:**
eine Antriebseinheit (2), die schwenkbar am Fahrzeugkörperrahmen (10) gelagert und mit dem Hinterrad (4) verbunden ist, so dass dazwischen Kraft übertragen werden kann,
wobei die Trägheitsmesseinheit (6) relativ zur Antriebseinheit (2) in Fahrzeug-Vorder-Rück-Richtung hinten angeordnet ist.

3. Das Neige-Fahrzeug (1) gemäß Anspruch 1 oder 2, **gekennzeichnet durch** eine hintere Aufhängung (50), die einen oberen Stützabschnitt (51), der an dem Fahrzeugkörperrahmen (10) gelagert ist, so dass der obere Stützabschnitt (51) um einen ersten Drehpunkt (51c) schwenkbar ist, und einen unteren Stützabschnitt (52), der an dem Hinterrad (4) gelagert ist, so dass der untere Stützabschnitt (52) um einen zweiten Drehpunkt (52c) schwenkbar ist, enthält.

4. Das Neige-Fahrzeug (1) gemäß Anspruch 3, **dadurch gekennzeichnet, dass** die Trägheitsmesseinheit (6) relativ zum ersten Drehpunkt (51c) in Fahrzeug-Vorder-Rück-Richtung bei seitlicher Betrachtung des Fahrzeugs nach hinten angeordnet ist.

5. Das Neige-Fahrzeug (1) gemäß Anspruch 3 oder 4, **dadurch gekennzeichnet, dass** die Trägheitsmesseinheit (6) in Fahrzeug-Vorder-Rück-Richtung in der Seitenansicht des Fahrzeugs relativ zum zweiten Drehpunkt (52c) nach hinten angeordnet ist.

6. Das Neige-Fahrzeug (1) gemäß irgendeinem der Ansprüche 3 bis 5, **dadurch gekennzeichnet, dass** die Trägheitsmesseinheit (6) an einer Position angeordnet ist, die außerhalb einer Geraden (50L) liegt, die durch den ersten Drehpunkt (51c) und den zweiten Drehpunkt (52c) verläuft, wenn das Fahrzeug von der Seite betrachtet wird.

7. Das Neige-Fahrzeug (1) gemäß irgendeinem der Ansprüche 3 bis 6, **dadurch gekennzeichnet, dass** die hintere Aufhängung (50) angeordnet ist, so dass ein Liniensegment (M50), das den ersten Drehpunkt (51c) und den zweiten Drehpunkt (52c) miteinander verbindet, mit einer vertikalen Linie des Fahrzeugs zusammenfällt oder um einen Winkel von 10 Grad oder weniger relativ zur vertikalen Linie des Fahrzeugs geneigt ist, wenn das Fahrzeug von der Seite betrachtet wird.

8. Das Neige-Fahrzeug (1) gemäß irgendeinem der Ansprüche 1 bis 7, **gekennzeichnet durch:**
einen Staukasten (40), der am Fahrzeugkörperrahmen (10) getragen wird und in der Fahrzeug-Aufwärts-Abwärts-Richtung unterhalb des Sitzes (5) angeordnet ist,
wobei die Trägheitsmesseinheit (6) in Fahrzeug-Vorder-Rück-Richtung hinter dem Staukasten (40) angeordnet ist.

9. Neige-Fahrzeug (1) gemäß irgendeinem der Ansprüche 1 bis 8, **dadurch gekennzeichnet, dass** der Fahrzeugkörperrahmen (10) einen Tragrahmen (16) aufweist, der in Fahrzeug-Vorder-Rück-Richtung hinter dem Staukasten (40) angeordnet ist; und
das Neige-Fahrzeug (1) eine Halterung (60) enthält, die am Tragrahmen (16) befestigt ist und an der Trägheitsmesseinheit (6) angebracht ist.

10. Das Neige-Fahrzeug (1) gemäß Anspruch 9, **dadurch gekennzeichnet, dass** die Halterung (60) einen plattenförmigen Hauptabschnitt (61), der ein erstes Bolzenloch (61a) darin ausgebildet hat, und sich in der Aufwärts-Abwärts-Richtung des Fahrzeugs nach unten erstreckt, und einen Armabschnitt (62), der zweites Bolzenloch (62a) darin ausgebildet hat, das sich von dem Hauptabschnitt (61) in der Vorwärts-Rückwärts-Richtung des Fahrzeugs nach vorne erstreckt, enthält, wobei das Neige-Fahrzeug (1) umfasst:
einen ersten Bolzen (65A), der durch das erste Bolzenloch (61a) eingeführt wird und die Trägheitsmesseinheit (6) an der Halterung (60) befestigt; und
einen zweiten Bolzen (65B), der durch das zweite Bolzenloch (62a) eingeführt wird und die Halterung (60) an dem Tragrahmen (16) befestigt; und
die Trägheitsmesseinheit (6) zwischen dem Tragrahmen (16) und dem Hauptabschnitt (61) der Halterung (60) angeordnet ist.

11. Das Neige-Fahrzeug (1) gemäß irgendeinem der Ansprüche 1 bis 10, **dadurch gekennzeichnet, dass** die Trägheitsmesseinheit (6) angeordnet ist, so dass eine Abmessung (H6) der Trägheitsmesseinheit (6) in Fahrzeug-Aufwärts-Abwärts-Richtung größer ist als eine Abmessung (L6) der Trägheitsmesseinheit (6) in Fahrzeug-Vorder-Hinter-Richtung.

12. Das Neige-Fahrzeug (1) gemäß irgendeinem der Ansprüche 1 bis 11, **dadurch gekennzeichnet, dass** die Steuervorrichtung (36) konfiguriert ist, um den Aktuator (31) zu steuern, so dass sich der Fahrzeugkörperrahmen (10) in einer aufrechten Position befindet, während das Neige-Fahrzeug (1) stillsteht.

## Revendications

1. Véhicule inclinable (1) comprenant :
un châssis de véhicule (10) ;
un mécanisme de liaison (20) supporté par le cadre du châssis du véhicule (10) ;
une roue avant gauche (3L) soutenue par le mécanisme de liaison (20) ;
une roue avant droite (3R) supportée par le mécanisme de liaison (20) et placée à droite de la roue avant gauche (3L) dans le sens gauche-droite du véhicule ;
une roue arrière (4) supportée par le châssis du véhicule (10) et disposée vers l'arrière par rapport à la roue avant gauche (3L) et à la roue avant droite (3R) dans la direction avant-arrière du véhicule ; et
un siège (5) supporté par le châssis du véhicule (10) et disposé vers l'arrière par rapport au mécanisme de liaison (20) dans la direction avant-arrière du véhicule, dans lequel :
le mécanisme de liaison (20) comprend :
un bras supérieur (21) supporté par le cadre du châssis du véhicule (10) de sorte que le bras supérieur (21) puisse tourner autour d'un premier axe (21Cc) s'étendant dans la direction avant-arrière du véhicule et s'étendant vers la gauche et vers la droite dans la direction gauche-droite du véhicule ;
un bras inférieur (22) supporté par le cadre du châssis du véhicule (10) de sorte que le bras inférieur (22) puisse tourner autour d'un deuxième axe (22Cc) s'étendant dans la direction avant-arrière du véhicule, s'étendant vers la gauche et vers la droite dans la direction gauche-droite du véhicule, et disposé vers le bas du bras supérieur (21) dans la direction haut-bas du véhicule ;
un élément latéral gauche (23) relié au bras supérieur (21) de manière à ce que l'élément latéral gauche (23) puisse tourner autour d'un troisième axe (21 Lc) s'étendant dans la direction avant-arrière du véhicule, relié au bras inférieur (22) de manière à ce que l'élément latéral gauche (23) puisse tourner autour d'un quatrième axe (22 Lc) s'étendant dans la direction avant-arrière du véhicule, et s'étendant vers le haut et vers le bas dans la direction haut-bas du véhicule ; et
un élément latéral droit (24) supporté par le bras supérieur (21) de sorte que l'élément latéral droit (24) puisse tourner autour d'un cinquième axe (21 Rc) s'étendant dans la direction avant-arrière du véhicule, supporté par le bras inférieur (22) de sorte que l'élément latéral droit (24) puisse tourner autour d'un sixième axe (22 Rc) s'étendant dans la direction avant-arrière du véhicule, s'étendant vers le haut et vers le bas dans la direction haut-bas du véhicule, et disposé à droite de l'élément latéral gauche (23) dans la direction gauche-droite du véhicule, le véhicule inclinable (1) comprenant :
un actionneur (31) connecté au châssis du véhicule (10) et à au moins un des bras supérieur (21) et inférieur (22), et configuré pour générer un couple qui fait tourner le bras supérieur (21) et le bras inférieur (22) par rapport au châssis du véhicule (10) ;
une unité de mesure inertielle (6) est supportée par le châssis du véhicule (10) et disposée vers le bas par rapport à une extrémité supérieure (21t) du bras supérieur (21) et vers le haut par rapport à une extrémité inférieure (22d) du bras inférieur (22) dans le sens haut-bas du véhicule, et vers l'arrière par rapport à une extrémité avant (5f) du siège (5) dans le sens avant-arrière du véhicule ; et
un dispositif de commande (36) configuré pour recevoir un signal de l'unité de mesure inertielle (6) afin de commander l'actionneur (31),
**caractérisé en ce que**
l'unité de mesure inertielle (6) est disposée vers la droite par rapport à l'extrémité gauche (231) de l'élément latéral gauche (23) et vers la gauche par rapport à l'extrémité droite (24r) de l'élément latéral droit (24) dans la direction gauche-droite du véhicule, l'unité de mesure inertielle (6) étant disposée vers l'arrière par rapport au centre de la roue arrière (4) dans la direction avant-arrière du véhicule.

2. Véhicule inclinable (1) selon la revendication 1, **caractérisé par** :
une unité de puissance (2) pivotant sur le châssis du véhicule (10) et reliée à la roue arrière (4) afin que la puissance puisse être transmise entre les deux,
véhicule dans lequel l'unité de mesure inertielle (6) est disposée vers l'arrière par rapport à l'unité motrice (2) dans la direction avant-arrière du véhicule.

3. Véhicule inclinable (1) selon les revendications 1 ou 2, **caractérisé par** une suspension arrière (50) comprenant une partie support supérieure (51) supportée sur le cadre du corps du véhicule (10) de sorte que la partie support supérieure (51) est pivotable autour d'un premier centre de pivot (51c), et une partie support inférieure (52) supportée sur la roue arrière (4) de sorte que la partie support inférieure (52) est pivotable autour d'un second centre de pivot (52c).

4. Véhicule inclinable (1) selon la revendication 3, **caractérisé par le fait que** l'unité de mesure inertielle (6) est disposée vers l'arrière par rapport au premier centre de pivotement (51c) dans la direction avant-arrière du véhicule lorsque celui-ci est vu de côté.

5. Véhicule inclinable (1) selon les revendications 3 ou 4, **caractérisé par le fait que** l'unité de mesure inertielle (6) est disposée vers l'arrière par rapport au deuxième centre de pivotement (52c) dans la direction avant-arrière du véhicule lorsque celui-ci est vu de côté.

6. Véhicule inclinable (1) selon l'une des revendications 3 à 5, **caractérisé par le fait que** l'unité de mesure inertielle (6) est disposée à une position qui est en dehors d'une ligne droite (50L) passant par le premier centre de pivotement (51c) et le second centre de pivotement (52c) lorsque le véhicule est vu de côté.

7. Véhicule inclinable (1) selon l'une quelconque des revendications 3 à 6, **caractérisé en ce que** la suspension arrière (50) est disposée de telle sorte qu'un segment de ligne (M50) qui relie le premier centre de pivot (51c) et le second centre de pivot (52c) coïncide avec une ligne verticale du véhicule ou est incliné d'un angle de 10 degrés ou moins par rapport à la ligne verticale du véhicule lorsque le véhicule est vu de côté.

8. Véhicule inclinable (1) selon l'une des revendications 1 à 7, **caractérisé par :** un coffre de rangement (40) supporté par le châssis du véhicule (10) et placé en dessous du siège (5) dans le sens haut-bas du véhicule, dans lequel l'unité de mesure inertielle (6) est placée en arrière du coffre de rangement (40) dans le sens avant-arrière du véhicule.

9. Véhicule inclinable (1) selon l'une quelconque des revendications 1 à 8, **caractérisé en ce que** le cadre du châssis du véhicule (10) comprend un cadre de support (16) disposé à l'arrière du coffre de rangement (40) dans la direction avant-arrière du véhicule ; et
le véhicule inclinable (1) comprend un support (60) fixé au cadre de support (16) et attaché à l'unité de mesure inertielle (6).

10. Véhicule inclinable (1) selon la revendication 9, **caractérisé en ce que** le support (60) comprend une partie principale en forme de plaque (61) comportant un premier trou de boulon (61a) et s'étendant vers le bas dans la direction haut-bas du véhicule, et une partie de bras (62) comportant un second trou de boulon (62a) et s'étendant vers l'avant à partir de la partie principale (61) dans la direction avant-arrière du véhicule, le Véhicule inclinable (1) comprenant :
un premier boulon (65A) inséré dans le premier trou de boulon (61a) et fixant l'unité de mesure inertielle (6) au support (60) ; et
un deuxième boulon (65B) inséré dans le deuxième trou de boulon (62a) et fixant le support (60) au cadre de support (16) ; et
l'unité de mesure inertielle (6) est disposée entre le cadre de support (16) et la partie principale (61) du support (60).

11. Véhicule inclinable (1) selon l'une des revendications 1 à 10, **caractérisé par le fait que** l'unité de mesure inertielle (6) est disposée de telle sorte qu'une dimension (H6) de l'unité de mesure inertielle (6) dans le sens haut-bas du véhicule est supérieure à une dimension (L6) de l'unité de mesure inertielle (6) dans le sens avant-arrière du véhicule.

12. Véhicule inclinable (1) selon l'une quelconque des revendications 1 à 11, **caractérisé en ce que** le dispositif de commande (36) est configuré pour commander l'actionneur (31) de manière à ce que le cadre du châssis du véhicule (10) soit en position verticale lorsque le véhicule inclinable (1) est à l'arrêt.
